# EUROPEAN PATENT APPLICATION

(11) **EP 3 712 468 A1**
(43) Date of publication of application: **23.09.2020**
(21) Application number: 18877771.8
(22) Date of filing: 15.11.2018
(51) Int. Cl.: F16J 15/10

(54) **SEALING MEMBER**

(30) Priority: 17.11.2017 JP 2017221893
(71) Applicant: NOK Corporation, Tokyo 105-8585 (JP)
(72) Inventor: KOGA Akiko, Fujisawa-shi Kanagawa 251-0042 (JP); HAMADA Norihiro, Fujisawa-shi Kanagawa 251-0042 (JP); MATSUDA Taisuke, Fujisawa-shi Kanagawa 251-0042 (JP); KIJIMA Tetsushi, Kitaibaraki-shi Ibaraki 319-1593 (JP)
(74) Representative: Global IP Europe Patentanwaltskanzlei
(86) International application number: PCT/JP2018/042364
(87) International publication number: WO 2019/098303

(57) **Abstract**

Provided is a sealing member which has a corrosion prevention function and is capable of effectively preventing the corrosion of a member to be sealed.

A sealing member includes: a rubber base material; and a coating provided on the rubber base material and having a melting point of 50°C or higher, wherein the coating contains a polymer containing an acrylic acid ester containing a perfluoroalkyl group or a methacrylic acid ester containing a perfluoroalkyl group, as a monomer.

## Description

### Technical Field

The present invention relates to a sealing member.

### Background Art

In vehicles and general purpose machines, for example, in automobiles, sealing members are used in an apparatus which houses an engine and electronic components, and the like, to seal a housing. The sealing member is elastically deformed, for example, by being interposed between a pair of members, which form the housing, in a compressed state, and provides sealing between the pair of members to seal the housing.

Automobiles occasionally travel in a coastal area or in an area where a snow melting agent is sprayed. At this time, when salt water or the snow melting agent adheres to the components of the automobiles and there is a gap between a member which clamps the sealing member and the sealing member, there are cases where the salt water or a component of the snow melting agent infiltrates into the gap and thereby corrosion (crevice corrosion) occurs in the member which clamps the sealing member. When this corroded portion exceeds a sealing line of the sealing member, and infiltrates into the housing, a material which forms the housing is corroded.

In recent years, in an automotive field, active progress has been made for reduction in weight to improve fuel economy, and the adoption of aluminum, which is lighter than iron-based members, is expanding. In general, aluminum is excellent in corrosion resistance compared to iron, but it tends to be easy to cause the above-described crevice corrosion.

Heretofore, methods for subjecting the surface of aluminum to various treatments in order to prevent the corrosion of aluminum have been conventionally considered. As a surface treatment method of a metal material such as aluminum, three methods of an alumite (anodization) treatment, a plating treatment, and corrosion prevention coating are mainly used.

Patent Literatures 1 and 2 disclose an alumite treatment; Patent Literature 3 discloses a plating treatment; and Patent Literatures 4 to 9 disclose corrosion prevention coating.

More specifically, Patent Literature 1 discloses an alumite member in which an anodic oxide film, and cobalt and/or chromium are present on the surface of an aluminum base material or an aluminum alloy base material.

Patent Literature 2 discloses a fuel pump in which an alumite layer is formed on the whole surface of a pump body.

Patent Literature 3 discloses a high corrosion resistant Ni-based composite plating film including a Cu-based plating film formed on the surface of a metal component and a Ni-based plating film formed thereon.

Patent Literature 4 discloses a composition which contains an ion source such as water or aluminum, and a chromium (III) cation source and the like, is substantially free of hexavalent chromium, and with which the surface of a metal is coated.

Patent Literature 5 discloses equipment which is coated with a coating containing a cured binder and hydrophilic flakes, wherein the surface of the flakes contains a metal oxide.

Patent Literature 6 discloses a steel sheet on which a coating film is formed by applying an ultraviolet curable resin composition.

Patent Literature 7 discloses a corrosion-resistant magnetic material including a coating layer composed of at least one or more kinds of materials selected from nitride-based materials made of CrN, TiN, AIN, BN, BCN, or AIBN and carbon-based materials including diamond-like carbon (DLC) containing hydrogen or TiC, on a surface, which comes into contact with seawater, of a base material made from a magnetic body.

Patent Literature 8 discloses an aluminum alloy material for a heat exchanger, wherein a fluororesin coating film having an isocyanate group or a siloxane group is directly provided on the surface of the aluminum alloy material.

Patent Literature 9 discloses a corrosion-resistant composition containing a polyamide imide (PAI) heat-resistant polymer binder, a liquid solvent, and inorganic filler particles.

### Document List

### Patent Literatures

Patent Literature 1: Japanese Patent Application Laid-Open No. 2015-232155
Patent Literature 2: Japanese Patent Application Laid-Open No. 2008-261282
Patent Literature 3: Japanese Patent No. 5365928
Patent Literature 4: National Publication of International Patent Application No. 2016-513755
Patent Literature 5: National Publication of International Patent Application No. 2015-509140
Patent Literature 6: Japanese Patent No. 5483296
Patent Literature 7: Japanese Patent Application Laid-Open No. 2010-177326
Patent Literature 8: Japanese Patent No. 5189823
Patent Literature 9: Japanese Patent No. 5319282

### Summary of Invention

### Technical Problem

In the conventional corrosion prevention method, corrosion is prevented by subjecting a member to be sealed to a surface treatment and the like. However, in the method for directly subjecting the member to be sealed to a treatment, there are cases where the corrosion prevention effect of the member to be sealed cannot be sufficiently achieved. In particular, in the case of an aluminum housing used as the material of the member to be sealed under an environment where aluminum easy to cause the crevice corrosion is contacted with salt water, there are cases where a corrosion prevention effect is remarkably deteriorated.

As a result of considering the problems, the present inventors found that the corrosion prevention of the member to be sealed can be effectively achieved not by subjecting the member to be sealed itself to a surface treatment but by imparting a corrosion prevention function to a sealing member which contacts the member to be sealed.

That is, it is an object of the present invention to provide a sealing member which has a corrosion prevention function and is capable of effectively preventing the corrosion of a member to be sealed.

### Solution to Problem

Each embodiment of the present invention is as follows.
[1] A sealing member comprising:
   a rubber base material; and
   a coating provided on the rubber base material and having a melting point of 50°C or higher,
   wherein the coating contains a polymer containing an acrylic acid ester containing a perfluoroalkyl group or a methacrylic acid ester containing a perfluoroalkyl group, as a monomer.
[2] The sealing member according to [1], wherein the monomer is a monomer represented by the following general formula (1):

   CₙF₂ₙ₊₁(CH₂CF₂)ₐ(CF₂CF₂)_{b}(CH₂CH₂)_{c}OCOCR=CH₂ (1)

   wherein R is a hydrogen atom or a methyl group; n is an integer of 1 to 6; a is an integer of 1 to 4; b is an integer of 1 to 3; and c is an integer of 1 to 3.
[3] The sealing member according to [1] or [2], wherein a content of the monomer in the polymer is 50% by mass or more and 90% by mass or less.
[4] The sealing member according to any one of [1] to [3], wherein the sealing member is a sealing member used for an aluminum housing.

### Effects of Invention

A sealing member which has a corrosion prevention function and is capable of effectively preventing the corrosion of a member to be sealed can be provided.

### Description of Embodiments

A sealing member of one embodiment contains: a rubber base material; and a coating having a melting point of 50°C or higher. The coating contains a polymer containing an acrylic acid ester containing a perfluoroalkyl group or a methacrylic acid ester containing a perfluoroalkyl group, as a monomer.

As described above, the coating of the sealing member of one embodiment has a melting point of 50°C or higher, whereby, when the sealing member is used under a high-temperature environment of, for example, 50°C or higher, the sealing member is melted, to transfer the coating of the sealing member onto a surface to be sealed of the member to be sealed. The transferred coating contains a polymer containing, as a monomer, an acrylic acid ester containing a perfluoroalkyl group or a methacrylic acid ester containing a perfluoroalkyl group. This perfluoroalkyl group causes the transferred coating to exhibit water repellency, and can effectively prevent a corrosion component such as salt water from infiltrating into a crevice between the member to be sealed and the sealing member depending on a capillary phenomenon or the like and accumulating in the crevice. This can effectively prevent the corrosion of the surface to be sealed of the member to be sealed (the interface where the sealing member contacts the member to be sealed), and can maintain the sealing function of the sealing member.

In particular, heretofore, when an aluminum housing is used under an environment where the aluminum housing contacts a corrosion component such as salt water, cathode polarization becomes large in a crevice portion containing insufficient oxygen, and a sufficient potential for maintaining a passive film is not maintained in an anode part, so that the passive film is not sufficiently formed. As a result, the corrosion prevention function due to the passive film is less likely to be exhibited, so that the crevice corrosion of the aluminum housing is promoted. Meanwhile, when the sealing member of one embodiment is used under a high-temperature environment or the like as a sealing member for an aluminum housing which is a member to be sealed, the coating of the sealing member is melted, and transferred onto the surface to be sealed of the member to be sealed. The transferred coating contains the polymer containing, as a monomer, an acrylic acid ester containing a perfluoroalkyl group or a methacrylic acid ester containing a perfluoroalkyl group. For this reason, the surface to be sealed has excellent water repellency. This makes it possible to effectively prevent a corrosion component such as salt water from infiltrating into a crevice between each of a pair of clamping members which form the aluminum housing and the sealing member. As a result, the corrosion of the aluminum housing can be effectively prevented, and the sealing function can be maintained.

The shape of the sealing member is not particularly limited, and can take an arbitrary shape. Examples thereof include sheet-like sealing members such as square, rectangle and disk-like, and annular sealing members such as an O ring and a square ring.

Hereinafter, the configuration of the sealing member of one embodiment and a method for manufacturing the same will be described.

### (Rubber Base Material)

The material of the rubber base material is not particularly limited as long as the effect of the present invention is not impaired. As the rubber base material, an elastomer having water resistance is preferable, and the examples of the rubber base material include at least one material selected from the group consisting of a cured ethylene-propylene-diene ternary copolymer rubber (EPDM), a nitrile rubber (NBR), and a hydrogenated nitrile rubber (HNBR). Such a material may contain various additives as needed.

It is preferable that the rubber base material has excellent water resistance. From such a viewpoint, it is more preferable that the material of the rubber base material is at least one material selected from the group consisting of a cured EPDM, a NBR and a HNBR. Among these, it is more preferable that at least one of an EPDM or a HNBR is contained. The type A durometer hardness of the rubber base material is preferably 40 or more and 90 or less, more preferably 50 or more and 80 or less, and still more preferably 60 or more and 70 or less. The type A durometer hardness represents a hardness measured by a measuring method specified in JIS K 6253-3:2012. The type A durometer hardness of the rubber base material is within these ranges, whereby more excellent adhesiveness and sealability of a sealing member to a member to be sealed can be provided.

### (Coating)

The coating has a melting point of 50°C or higher. The melting point of the coating is preferably 50°C or higher and 90°C or lower, more preferably 50°C or higher and 80°C or lower, and still more preferably 50°C or higher and 70°C or lower. The melting point of the coating is within these ranges, whereby the coating can have excellent transferring properties to a surface to be sealed of a member to be sealed. The melting point of the coating can be measured with a differential scanning calorimeter (DSC). It is preferable that the contact angle of water with respect to the coating is 110° or more.

The coating contains a polymer containing, as a monomer, an acrylic acid ester containing a perfluoroalkyl group or a methacrylic acid ester containing a perfluoroalkyl group. The monomer may contain a perfluoroalkyl group as at least a part of groups, and all hydrogen atoms which can be substituted in the monomer may not be substituted with fluorine atoms. The monomer is preferably a monomer represented by the following general formula (1).

CₙF₂ₙ₊₁(CH₂CF₂)ₐ(CF₂CF₂)_{b}(CH₂CH₂)_{c}OCOCR=CH₂ (1)

wherein R is a hydrogen atom or a methyl group; n is an integer of 1 to 6; a is an integer of 1 to 4; b is an integer of 1 to 3; and c is an integer of 1 to 3.

The monomer of the general formula (1) can be obtained, for example, by causing acrylic acid or methacrylic acid to react with an alcohol containing a perfluoroalkyl group.

The polymer may be obtained by independently polymerizing the monomer of the general formula (1), or copolymerizing the monomer of the general formula (1) and at least one monomer selected from the group consisting of other polymerizable fluorine-containing monomer and a polymerizable non-fluorine atoms-containing monomer.

The polymerizable fluorine-containing monomer is preferably a monomer having a polyfluoroalkyl group or a perfluoroalkyl group having 1 to 6 carbon atoms, and more preferably a monomer having a polyfluoroalkyl group or a perfluoroalkyl group having 2 to 5 carbon atoms.

As the polymerizable fluorine-containing monomer, more preferred are polymerizable fluorine-containing monomers represented by the following general formula (2):

CH₂=CRCOOR₁-(NR₂SO₂)ₘ-Rf (2)

wherein R represents a hydrogen atom or a methyl group; R₁ represents a divalent organic group, preferably an alkylene group or a polyfluoroalkylene group having 1 to 4 carbon atoms; R₂ represents a lower alkyl group having 1 to 5 carbon atoms; Rf represents a polyfluoroalkyl group, preferably a perfluoroalkyl group, having 1 to 6, preferably 2 to 4 carbon atoms; and m represents 0 or 1.

Examples of the polymerizable fluorine-containing monomer represented by the general formula (2) include the following monomers. However, the number n of the carbon atoms of a terminal polyfluoroalkyl group in the following monomers is 1 to 6. When the R₁ group is a polyfluoroalkylene group and m is 0, the number of carbon atoms as the total with that of the terminal polyfluoroalkyl group is 1 to 6.

CH₂=CHCOOCH₂CₙF₂ₙH

CH₂=C(CH₃)COOCH₂CₙF₂ₙH

CH₂=CHCOOCH₂CₙF₂ₙ₊₁

CH₂=C(CH₃)COOCH₂CₙF₂ₙ₊₁

CH₂=CHCOOC₂H₄CₙF₂ₙ₊₁

CH₂=C(CH₃)COOC₂H₄CₙF₂ₙ₊₁

CH₂=CHCOOC₃H₆CₙF₂ₙ₊₁

CH₂=C(CH₃)COOC₃H₆CₙF₂ₙ₊₁

CH₂=CHCOOC₄H₈CₙF₂ₙ₊₁

CH₂=C(CH₃)COOC₄H₈CₙF₂ₙ₊₁

CH₂=CHCOOC₂H₄N(CH₃)SO₂CₙF₂ₙ₊₁

CH₂=C(CH₃)COOC₂H₄N(CH₃)SO₂CₙF₂ₙ₊₁

CH₂=CHCOOC₂H₄N(C₂H₅)SO₂CₙF₂ₙ₊₁

CH₂=C(CH₃)COOC₂H₄N(C₂H₅)SO₂CₙF₂ₙ₊₁

CH₂=CHCOOC₂H₄N(C₃H₇)SO₂CₙF₂ₙ₊₁

CH₂=C(CH₃)COOC₂H₄N(C₃H₇)SO₂CₙF₂ₙ₊₁

CH₂=CHCOOC₂H₄CₙF₂ₙCF(CF₃)₂

CH₂=C(CH₃)COOC₂H₄CₙF₂ₙCF(CF₃)₂

Preferred examples of the polymerizable non-fluorine atoms-containing monomer include monomers represented by the general formula (3).

R₃OCOCR=CH₂ (3)

wherein R represents a hydrogen atom or a methyl group; and R₃ represents an alkyl group, an alkoxyalkyl group, a cycloalkyl group, an aryl group, or an aralkyl group.

Examples of the (meth)acrylic acid ester of the general formula (3) include acrylic acid esters or methacrylic acid esters esterified by an alkyl group such as methyl, ethyl, propyl, isopropyl, n-butyl, n-hexyl, 2-ethylhexyl, n-octyl, lauryl, or stearyl; an alkoxyalkyl group such as methoxymethyl, 2-methoxyethyl, 2-ethoxyethyl, 2-butoxyethyl, or 3-ethoxypropyl; a cycloalkyl group such as cyclohexyl, an aryl group such as phenyl; or an aralkyl group such as benzyl. In addition, monoalkyl esters or dialkyl esters of fumaric acid or maleic acid, such as monomethyl, dimethyl, monoethyl, diethyl, monopropyl, dipropyl, monobutyl, dibutyl, mono2-ethylhexyl, di2-ethylhexyl, monooctyl, or dioctyl esters thereof and vinyl esters such as vinyl acetate or vinyl caprylate are also used. More preferably, alkyl(meth)acrylate having a long chain alkyl group having 8 or more carbon atoms, for example, an alkyl group such as 2-ethylhexyl, n-octyl, lauryl, or stearyl; and acrylic acid esters esterified by a cycloalkyl group such as a cyclohexyl, an aralkyl group such as benzyl or the like can be used.

Here, the (meth)acrylate means an acrylic acid ester or a methacrylic acid ester.

The content of the monomer of the acrylic acid ester containing a perfluoroalkyl group or the methacrylic acid ester containing a perfluoroalkyl group in the polymer is preferably 5% by mass or more and 90% by mass or less, more preferably 30% by mass or more and 90% by mass or less, and still more preferably 50% by mass or more and 90% by mass or less.

Monomers other than the above-mentioned monomers can also be copolymerized in the polymer. Examples of the monomers include ethylene, styrene, vinylidene chloride, vinyl chloride, vinyl fluoride, vinylidene fluoride, vinyl toluene, α-methylstyrene, p-methylstyrene, vinyl naphthalene, acrylonitrile, methacrylonitrile, isoprene, pentadiene, butadiene, chloroprene, vinyl alkyl ether, halogenated alkyl vinyl ether, vinyl alkyl ketone, aziridinylethyl(meth)acrylate, aziridinyl(meth)acrylate, polysiloxane-containing (meth)acrylate, triallyl(iso)cyanurate, allyl glycidyl ether, allyl acetate, N-vinyl carbazole, maleimide, N-methyl maleimide, (2-dimethylamino)ethyl(meth)acrylate, hydroxyethyl(meth)acrylate, side-chain silicon-containing (meth)acrylate, urethane bond-containing (meth)acrylate, hydroxyethyl vinyl ether, and hydroxybutyl vinyl ether.

When the sealing member is used as the sealing member for an aluminum housing, the thickness of the coating is preferably larger than the maximum height roughness Rz of the surface to be sealed of the aluminum housing. For example, when the Rz of the surface to be sealed is 6 µm, it is preferable that the thickness of the coating is more than 6 µm. The coating has these thicknesses, whereby the sealing member can have more excellent sealability.

The coating can contain other additives. Examples of the additive include a binder, a thickener, a flow auxiliary agent, an antifoaming agent, a filler, a leveling agent, and an adhesion improvement agent.

### (Aluminum Housing)

The sealing member according to one embodiment is interposed in a state where the sealing member is compressed between a pair of members which form the aluminum housing, to cause the sealing member to be elastically deformed, thereby providing sealing between the pair of the members. Thus, the aluminum housing can be sealed by the sealing member. When a conventional aluminum housing is used under an environment where the aluminum housing contacts a corrosion component such as salt water, a passive film is not sufficiently formed, so that the crevice corrosion of the aluminum housing is promoted. Meanwhile, when the sealing member of one embodiment is used under a high-temperature environment or the like as a sealing member for an aluminum housing, the coating of the sealing member is melted, and transferred onto the surface to be sealed of the member to be sealed. The transferred coating contains the polymer containing, as a monomer, an acrylic acid ester containing a perfluoroalkyl group or a methacrylic acid ester containing a perfluoroalkyl group. For this reason, the surface to be sealed has excellent water repellency. This makes it possible to effectively prevent a corrosion component such as salt water from infiltrating into a crevice between each of a pair of clamping members which form the aluminum housing and the sealing member. As a result, the corrosion of the aluminum housing can be effectively prevented, and the sealing function can be maintained.

Aluminum or an aluminum-based alloy can be used as the material of the aluminum housing. The aluminum-based alloy is an alloy in which the main component (component of which content is largest among those of composition components) is aluminum, and alloy components other than aluminum include copper (Cu), silicon (Si), zinc (Zn), iron (Fe), and magnesium (Mg).

In the aluminum housing, at least one of members clamping the sealing member may be the above-mentioned aluminum or aluminum-based alloy, and other clamping members may be a metal member other than an aluminum-based member, or a resin member. The shape and size of the member clamping the sealing member, the properties of the surface pressing the sealing member, and the like are not particularly limited, and can be appropriately selected depending on the use site and object of the sealing member.

The kind of the aluminum housing is particularly not limited, and preferred is an aluminum housing used under an environment where the aluminum housing contacts salt water. Examples of the aluminum housing include an aluminum housing for vehicle and include aluminum housings for a converter, an electric power steering-control computer-continuously variable transmission, an electric water pump, a stroke sensor, a brake and the like, and a thermostat housing.

### (Method for Manufacturing Sealing Member)

A method for manufacturing a sealing member of one embodiment will be described later. First, a rubber base material is prepared. The rubber base material may have a desired shape and contain a rubber which has been already cured, or may be obtained by curing and molding a rubber material.

Thereafter, a coating containing a polymer containing, as a monomer, an acrylic acid ester containing a perfluoroalkyl group or a methacrylic acid ester containing a perfluoroalkyl group is formed on a rubber base material. Examples of the formation method of the coating include, but are not particularly limited to, a method in which a liquid material containing the above-mentioned monomer and optionally an additive is applied onto a rubber base material, and the liquid material is then dried by a heat treatment for a predetermined period of time to polymerize the monomer to provide a polymer, and to cure the liquid material.

The application method of the liquid material is not particularly limited. Examples thereof include a wire bar coater, a film applicator, a spray, air knife coating, a die coat, and inkjet printing. It is preferable that spray application is performed since the spray application provides a coating having a uniform film thickness.

Hereinabove, the embodiment of the present invention has been described, but the present invention is not limited to the above-mentioned embodiment. The present invention includes all aspects encompassed in the concept and claims of the present invention, and can be variously modified within the range of the present invention.

### [Examples]

Thereafter, in order to further clarify the effect of the present invention, Examples and Comparative Examples will be described, but the present invention is not limited to these Examples.

### (Example 1)

As a rubber base material, an O ring was prepared, which had a type A durometer hardness of 70 and was composed of a cured ethylene-propylene-diene ternary copolymer rubber (EPDM). Thereafter, the surface of the O ring was degreased by methyl ethyl ketone, and a primer (manufactured by Dow Corning Toray Co., Ltd., DY39-067) was then applied with a spray. Then, the primer applied onto the surface of the O ring was dried at room temperature for 30 minutes. Then, a coating material (a copolymer A containing a methacrylic acid ester containing a perfluoroalkyl group as a monomer) was applied onto the surface of the O ring with a spray, and then dried at 120°C for 10 minutes to cure the coating material, thereby forming a coating containing the copolymer A containing a methacrylic acid ester containing a perfluoroalkyl group as a monomer on the surface of the O ring. A sealing member including the rubber base material and the coating was finally obtained.

The obtained sealing member was interposed between a pair of aluminum base materials (ADC12) such that a compression ratio was set to 17%, and the sealing member interposed between the aluminum base materials was then immersed into salt water having a salt concentration of 5% by mass at 50°C for 720 hours. The sealing member interposed between the aluminum base materials was then taken out from the salt water, and the O ring interposed between the aluminum base materials was removed. Then, the presence or absence of rust of the surface of the aluminum base material which contacted the sealing member was visually confirmed. A case where the rust was visually confirmed was defined as "poor", and a case where the rust was not visually confirmed was defined as "good." The evaluation result was taken as a "salt water immersion test result."

The obtained sealing member was interposed between a pair of aluminum base materials (ADC12) such that a compression ratio was set to 17%, and the sealing member interposed between the aluminum base materials was then held at 50°C for 24 hours. Then, the O ring interposed between the aluminum base materials was removed. Then, the presence or absence of the transfer of the coating to the surface of the aluminum base material which contacted the sealing member was visually confirmed. A case where the transfer of the coating to the aluminum base material was not visually confirmed was defined as "poor", and a case where the transfer of the coating to the aluminum base material was visually confirmed was defined as "good." The evaluation result was taken as a "coating transfer test result."

A droplet was dropped onto the surface of the obtained sealing member, and the contact angle of the droplet on the coating was measured with a contact angle meter. Only a coating was formed under the same conditions as the above, and the melting point of the coating was measured with a differential scanning calorimeter.

### (Example 2)

A sealing member was produced in the same manner as in Example 1 except that a coating component was changed to a copolymer B containing a methacrylic acid ester containing a perfluoroalkyl group as a monomer in Example 1. The obtained sealing member was evaluated in the same manner as in Example 1.

### (Comparative Example 1)

A sealing member was produced in the same manner as in Example 1 except that a coating component was changed to a coating component containing a thermosetting resin containing a perfluoroalkyl group in Example 1. The obtained sealing member was evaluated in the same manner as in Example 1.

### (Comparative Example 2)

A sealing member was produced in the same manner as in Example 1 except that a primer and a coating material were not applied in Example 1. The obtained sealing member was evaluated in the same manner as in Example 1.

The results obtained in Examples 1 and 2 and Comparative Examples 1 and 2 are shown in Table 1.

**[Table 1]**

| | Example 1 | Example 2 | Comparative Example 1 | Comparative Example 2 |
|---|---|---|---|---|
| Material for rubber base material | EPDM | EPDM | EPDM | EPDM |
| Primer application | Presence | Presence | Presence | Absence |
| Kind of coating component | Copolymer A containing a methacrylic acid ester containing a perfluoroalkyl group as a monomer | Copolymer B containing a methacrylic acid ester containing a perfluoroalkyl group as a monomer | Coating component containing a thermosetting resin containing a perfluoroalkyl group | Absence |
| Melting point of coating (°C) | 67 | 67 | Absence | Absence |
| Salt water immersion test result | Good | Good | Poor | Poor |
| Coating transfer test result | Good | Good | Poor | Poor |
| Contact angle of water with respect to coating (°) | 119 | 120 | 117 | 103 |

In Table 1, the coating component used in Comparative Example 1 contained a thermosetting resin component, whereby the melting point of the coating could not be measured.

From the results of Table 1, Examples 1 and 2 contained a rubber base material and a coating having a melting point of 50°C or higher on the rubber base material, and the coating included a copolymer containing a methacrylic acid ester containing a perfluoroalkyl group as a monomer, so that both the salt water immersion test result and the coating transfer test result were "good."

Meanwhile, in Comparative Example 1, the coating contained a thermosetting resin, so that the melting point of the coating was not 50°C or higher, and both the salt water immersion test result and the coating transfer test result were "poor."

In Comparative Example 2, the coating itself was not provided, so that both the salt water immersion test result and the coating transfer test result were "poor."

## Claims

1. A sealing member comprising:
a rubber base material; and
a coating provided on the rubber base material and having a melting point of 50°C or higher,
wherein the coating contains a polymer containing an acrylic acid ester containing a perfluoroalkyl group or a methacrylic acid ester containing a perfluoroalkyl group, as a monomer.

2. The sealing member according to claim 1, wherein the monomer is a monomer represented by the following general formula (1):
CₙF₂ₙ₊₁(CH₂CF₂)ₐ(CF₂CF₂)_{b}(CH₂CH₂)_{c}OCOCR=CH₂ (1)
wherein R is a hydrogen atom or a methyl group; n is an integer of 1 to 6; a is an integer of 1 to 4; b is an integer of 1 to 3; and c is an integer of 1 to 3.

3. The sealing member according to claim 1 or 2, wherein a content of the monomer in the polymer is 50% by mass or more and 90% by mass or less.

4. The sealing member according to any one of claims 1 to 3, wherein the sealing member is a sealing member used for an aluminum housing.
